# EUROPEAN PATENT APPLICATION

(11) **EP 3 703 252 A1**
(43) Date of publication of application: **02.09.2020**
(21) Application number: 18871690.6
(22) Date of filing: 27.09.2018
(51) Int. Cl.: H02S 20/32, G05D 3/00, H02J 3/38, H02J 13/00, H02S 50/00

(54) **SOLAR POWER GENERATION SYSTEM**

(30) Priority: 26.10.2017 JP 2017207464
(71) Applicant: Sumitomo Electric Industries, Ltd., Osaka-shi, Osaka 541-0041 (JP)
(72) Inventor: KITAYAMA, Kenichi, Osaka-shi Osaka 541-0041 (JP)
(74) Representative: Boult Wade Tennant LLP
(86) International application number: PCT/JP2018/035990
(87) International publication number: WO 2019/082589

(57) **Abstract**

This photovoltaic system is composed of a plurality of units of photovoltaic apparatuses collected together, each performing an operation of tracking the sun during daytime. The system includes: drive control units provided so as to correspond to the respective units of photovoltaic apparatuses; inverters provided so as to correspond to the respective units of photovoltaic apparatuses; a transformer apparatus configured to collect power from the inverters; a weather sensor configured to acquire information regarding weather in a place where the photovoltaic apparatuses are installed; and a monitoring control unit capable of remotely controlling the drive control units, capable of communicating with all the drive control units, all the inverters, the transformer apparatus, and the weather sensor, and having a function of detecting occurrence of abnormality and determining the type of the abnormality, based on information collected through communication.

## Description

### TECHNICAL FIELD

The present invention relates to a photovoltaic system.

This application claims priority based on Japanese Patent Application No. 2017-207464 filed on October 26, 2017, the entire contents of which are incorporated herein by reference.

### BACKGROUND ART

Concentrator Photovoltaic (CPV) is based on a structure in which sunlight concentrated by a Fresnel lens or the like is caused to be incident on a small-sized power generating element having a high power generating efficiency, thereby generating power. A large number of such basic structures are arranged in a matrix shape to form a concentrator photovoltaic module, and furthermore, a large number of the modules are arranged in a matrix shape to form a concentrator photovoltaic panel (array) (see Patent Literature 1, for example). The concentrator photovoltaic panel tracks the sun, and therefore is supported by a support device capable of driving the panel in two axes of the azimuth and the elevation.

Assuming that 1 unit of a photovoltaic apparatus is composed of a concentrator photovoltaic panel and a support device that supports the panel, a photovoltaic system, which is obtained by arranging a large number of such photovoltaic apparatuses in an extensive area in a region where solar radiation is high, can ensure a power generation amount of several tens of MW, for example.

### CITATION LIST

### [PATENT LITERATURE]

PATENT LITERATURE 1: Japanese Laid-Open Patent Publication No. 2014-226025

### SUMMARY OF INVENTION

A photovoltaic system according to an aspect of the present disclosure is a photovoltaic system composed of a plurality of units of photovoltaic apparatuses collected together, each performing an operation of tracking the sun during daytime. The photovoltaic system includes: drive control units provided so as to correspond to the respective units of photovoltaic apparatuses; inverters provided so as to correspond to the respective units of photovoltaic apparatuses; a transformer apparatus configured to collect power from the inverters; a weather sensor configured to acquire information regarding weather in a place where the photovoltaic apparatuses are installed; and a monitoring control unit capable of remotely controlling the drive control units, and capable of communicating with all the drive control units, all the inverters, the transformer apparatus, and the weather sensor, the monitoring control unit having a function of detecting abnormality, based on information collected through communication.

### BRIEF DESCRIPTION OF DRAWINGS

FIG. 1 is a perspective view of 1 unit of a concentrator photovoltaic apparatus viewed from a light receiving surface side thereof.
FIG. 2 is a perspective view of the 1 unit of concentrator photovoltaic apparatus viewed from a rear face side thereof.
FIG. 3 is a perspective view showing an example of a state where a light receiving surface of a photovoltaic panel faces the sun directly from the front.
FIG. 4 is a schematic diagram showing a state where, for example, 8 units of photovoltaic apparatuses are arrayed vertically and horizontally to form a photovoltaic system including 64 units of the photovoltaic apparatuses in total.
FIG. 5 is a connection diagram showing connection of each photovoltaic apparatus with common units in the entire system.
FIG. 6 is a connection diagram as a modification of FIG. 5.
FIG. 7 is a flowchart showing an example of a monitoring control operation performed by a monitoring control unit.

### DESCRIPTION OF EMBODIMENTS

### [TECHNICAL PROBLEM]

In the photovoltaic system described above, for example, for each of the large number of photovoltaic apparatuses, the output of generated power from the photovoltaic panel is converted to AC power via an inverter, and is provided to a transformer apparatus common to all the photovoltaic apparatuses. Meanwhile, attitude control for tracking the sun is performed for each photovoltaic apparatus. However, it is not practical, in terms of cost, to provide each photovoltaic apparatus with a weather sensor such as a solar radiation sensor. Therefore, a weather sensor is installed in one site in a place where the photovoltaic system is installed.

For example, during the night, a general instruction is given to make all the photovoltaic apparatuses take a common attitude with the photovoltaic panels being horizontal. For this purpose, there are cases where each photovoltaic apparatus is provided with a sub controller for attitude control while a common main controller that makes an instruction to the sub controllers of all the photovoltaic apparatuses is installed in some specific place.

In the above configuration, however, power generation, tracking control, and collection of weather information are performed independently from each other. Therefore, for example, individual pieces of information as viewed from the entire system are not advantageously used for the tracking control.

In view of the above problems, an object of the present disclosure is to provide a photovoltaic system capable of performing monitoring of the entire system and tracking control more efficiently.

### [ADVANTAGEOUS EFFECTS OF THE PRESENT DISCLOSURE]

According to the photovoltaic system of the present disclosure, monitoring of the entire system and tracking control can be performed more efficiently.

### [SUMMARY OF EMBODIMENTS]

The summary of an embodiment of the present disclosure includes at least the followings.

(1) A photovoltaic system is composed of a plurality of units of photovoltaic apparatuses collected together, each performing an operation of tracking the sun during daytime. The photovoltaic system includes: drive control units provided so as to correspond to the respective units of photovoltaic apparatuses; inverters provided so as to correspond to the respective units of photovoltaic apparatuses; a transformer apparatus configured to collect power from the inverters; a weather sensor configured to acquire information regarding weather in a place where the photovoltaic apparatuses are installed; and a monitoring control unit capable of remotely controlling the drive control units, and capable of communicating with all the drive control units, all the inverters, the transformer apparatus, and the weather sensor, the monitoring control unit having a function of detecting abnormality, based on information collected through communication.
   In this photovoltaic system, information of tracking operation and information of generated power regarding each photovoltaic apparatus are collected to the monitoring control unit, for all the photovoltaic apparatuses. This monitoring control unit can detect abnormality, based on the collected information. In addition, the monitoring control unit has all the drive control units under its control, and therefore can serve as a master controller regarding tracking. Thus, monitoring of the entire system and tracking control can be performed more efficiently.
(2) In the photovoltaic system according to the above (1), for example, the monitoring control unit determines whether or not deviation in tracking the sun occurs, based on response of generated power in a case where a tracking attitude of each photovoltaic apparatus is swung forward and backward within a predetermined range, for each of azimuth and elevation. Upon determining that tracking deviation occurs, the monitoring control unit causes the corresponding drive control unit to perform calibration operation for canceling the tracking deviation.
   In this case, the monitoring control unit, which monitors and controls the entirety of the plurality of photovoltaic apparatuses, can cause the corresponding drive control unit to perform the calibration operation.
(3) In the photovoltaic system according to the above (1) or (2), when deviation of generated power from a predicted value is substantially the same in all the photovoltaic apparatuses, the monitoring control unit may determine that a solar radiation sensor, which is the weather sensor, has abnormality.
   In this case, since it is difficult to consider that abnormalities occur in all the photovoltaic apparatuses at the same time, the monitoring control unit can determine that the solar radiation sensor detects a higher value or a lower value than the actual solar radiation.
(4) In the photovoltaic system according to any of the above (1) to (3), the monitoring control unit may be present via an Internet line from the place where the photovoltaic apparatuses are installed.

In this case, the monitoring control unit can be disposed in any place without being limited to the place where the photovoltaic apparatuses are installed.

### [DETAILS OF EMBODIMENTS]

Hereinafter, a photovoltaic system according to an embodiment of the present disclosure will be described with reference to the drawings.

### <<Photovoltaic apparatus>>

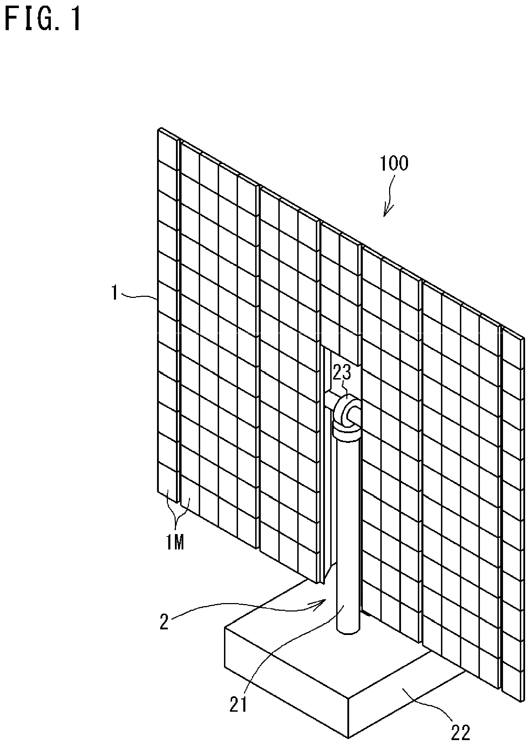

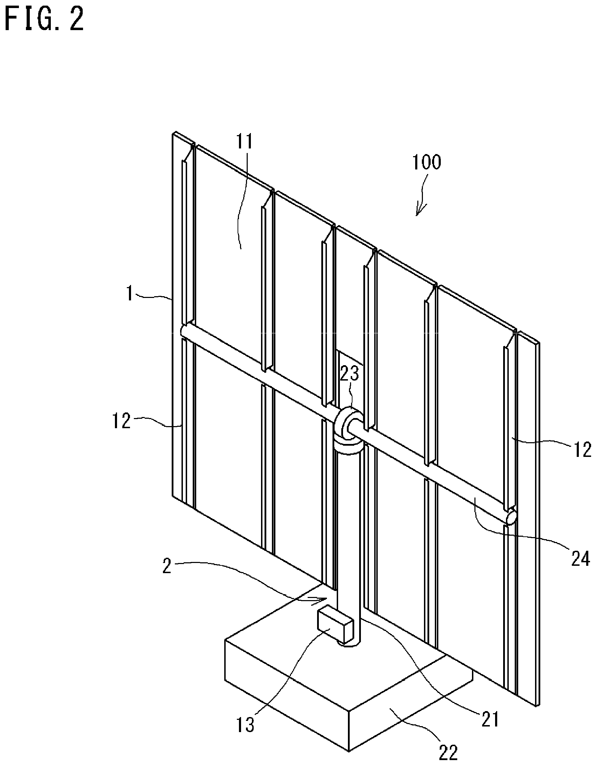

FIG. 1 and FIG. 2 are perspective views of 1 unit of a concentrator photovoltaic apparatus as viewed from a light receiving surface side and a rear face side, respectively. In FIG. 1, the photovoltaic apparatus 100 includes: a photovoltaic panel 1 having a shape that is continuous at the upper side and is divided into right and left portions at the lower side; and a support device 2 for supporting the photovoltaic panel 1. The photovoltaic panel (array) 1 is formed by concentrator photovoltaic modules 1M being arrayed on a mounting base 11 (FIG. 2) at the rear face side. In the example shown in FIG. 1, the photovoltaic panel 1 is configured as an assembly composed of 200 concentrator photovoltaic modules 1M in total, i.e., (96(=12x8)x2) modules 1M forming the right and left wings and 8 modules 1M forming a connection portion at the center.

The support device 2 includes a post 21, a base 22, a biaxial drive part 23, and a horizontal shaft 24 (FIG. 2) serving as a drive shaft. The lower end of the post 21 is fixed to the base 22, and the upper end of the post 21 is provided with the biaxial drive part 23. A box 13 (FIG. 2) for electric connection and for accommodating electric circuits is provided in the vicinity of the lower end of the post 21.

In FIG. 2, the base 22 is firmly embedded in the ground to an extent that only the upper face thereof is shown. In the state where the base 22 is embedded in the ground, the post 21 extends vertically and the horizontal shaft 24 extends horizontally. The biaxial drive part 23 can rotate the horizontal shaft 24 in two directions of azimuth (angle around the post 21 as the center axis) and elevation (angle around the horizontal shaft 24 as the center axis). The horizontal shaft 24 is fixed so as to be perpendicular to reinforcing members 12 that fix and reinforce the mounting base 11. Therefore, if the horizontal shaft 24 is rotated in the direction of azimuth or elevation, the photovoltaic panel 1 is also rotated in that direction.

FIG. 1 and FIG. 2 show the support device 2 supporting the photovoltaic panel 1 by means of the single post 21. However, the configuration of the support device 2 is not limited thereto. That is, any support device may be adopted as long as it can support the photovoltaic panel 1 so as to be movable in two axes (azimuth, elevation).

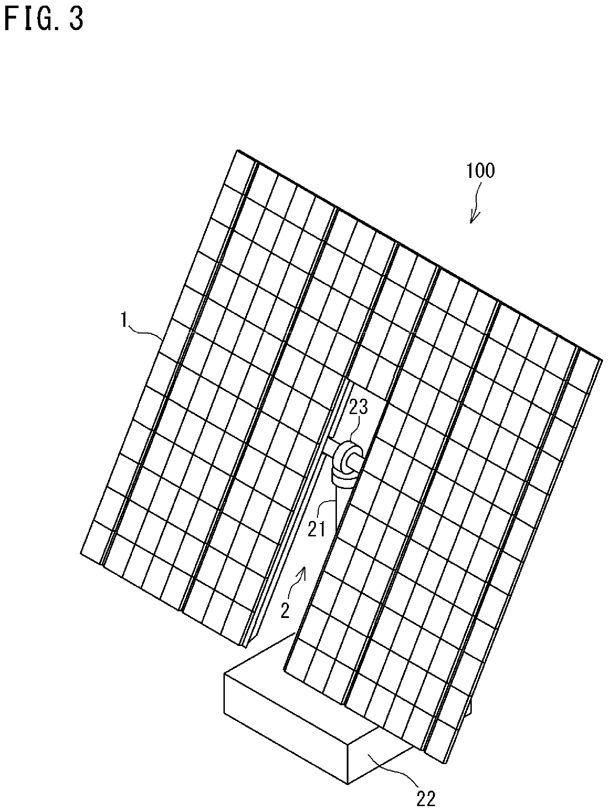

FIG. 3 is a perspective view showing an example of a state where the light receiving surface of the photovoltaic panel 1 faces the sun directly from the front. The attitude of the photovoltaic panel 1 is changed by the biaxial drive part 23 so that the panel 1 always faces the sun directly from the front.

After sunset, the photovoltaic apparatus 100 takes, for example, a horizontal attitude with the light receiving surface of the photovoltaic panel 1 facing downward, and waits until sunrise of the next day.

### <<Photovoltaic system>>

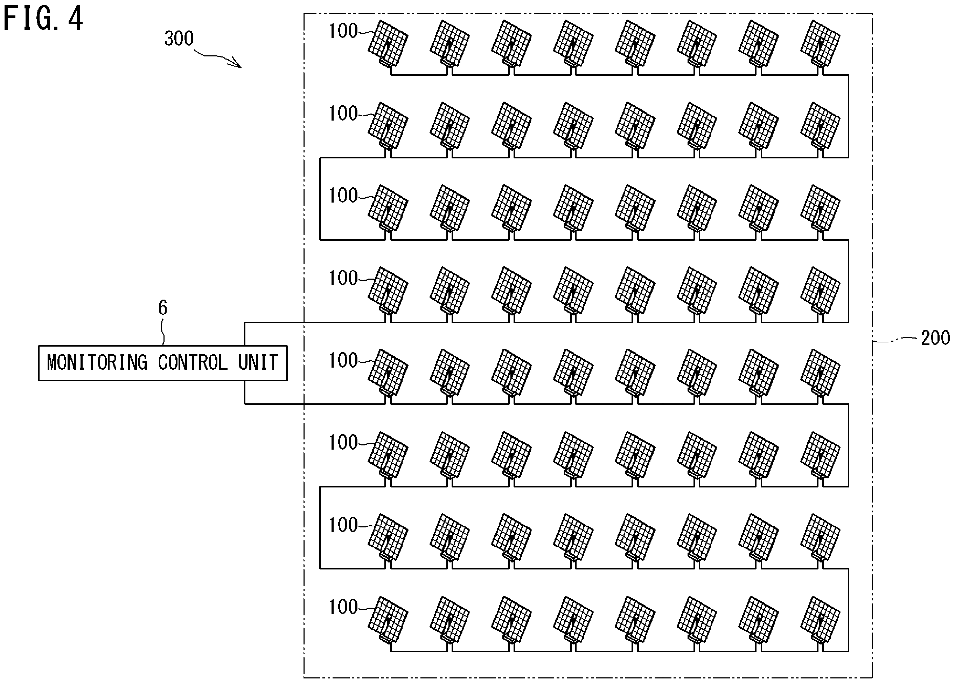

FIG. 4 is a schematic diagram showing a state where, for example, 8 units of photovoltaic apparatuses 100 are arranged vertically and horizontally to form a photovoltaic system 300 including a photovoltaic apparatus group 200 consisting of 64 units of photovoltaic apparatuses 100 in total. A monitoring control unit 6 is communicably connected to all the photovoltaic apparatuses 100, and is able to control the attitudes of the respective photovoltaic panels 1 individually or collectively.

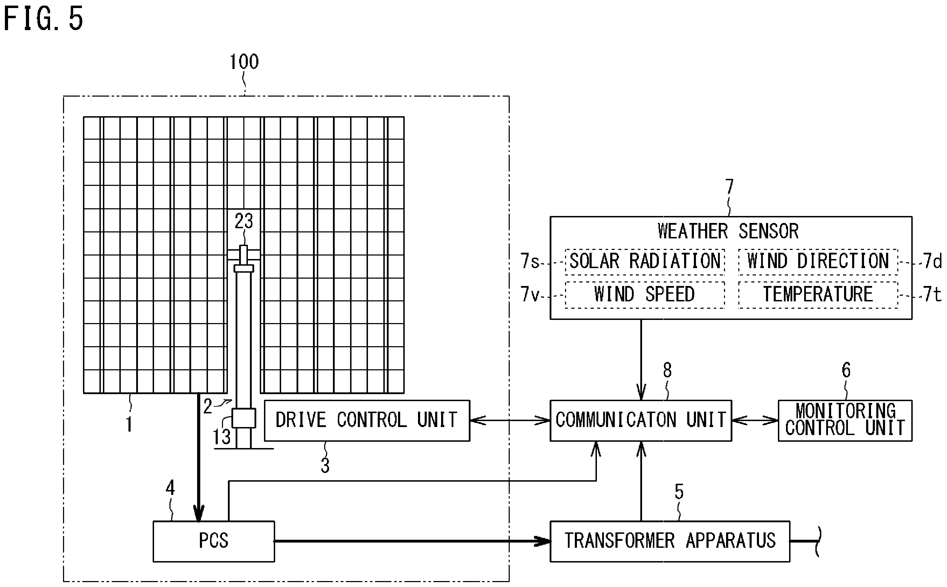

FIG. 5 is a connection diagram showing an example of connection of each photovoltaic apparatus 100 with common units in the entire system. In FIG. 5, the photovoltaic apparatus 100 includes, for example, a drive control unit 3 that is built in the box 13 and controls the biaxial drive part 23, and an inverter (power conditioner) 4, in addition to the aforementioned photovoltaic panel 1 supported by the support device 2. The drive control unit 3 controls the biaxial drive part 23 based on, for example, an output signal from a tracking sensor (not shown), to make the photovoltaic panel 1 perform an operation of tracking the sun. That is, each photovoltaic apparatus 100 can independently perform the operation of tracking the sun. The inverter 4 converts the output from the photovoltaic panel 1 to AC power, and sends the AC power to a transformer apparatus 5. The transformer apparatus 5 is connected to a power grid (not shown).

The drive control unit 3 is bi-directionally communicable with the monitoring control unit 6 via a communication unit 8. Information from each of the inverter 4, the transformer apparatus 5, and a weather sensor 7 is sent to the monitoring control unit 6 via the communication unit 8. The monitoring control unit 6 serves as a master controller for the drive control unit 3. That is, the monitoring control unit 6 can give an instruction about tracking operation to the drive control unit 3. In addition, the monitoring control unit 6 can receive information regarding tracking operation and error information from the drive control unit 3. Further, the monitoring control unit 6 can receive information regarding generated power and error information from the inverter 4, and can also receive information regarding generated power of the whole system and error information from the transformer apparatus 5. The communication unit 8 shown in FIG. 5 can be integrated with the monitoring control unit 6, as one of functions of the monitoring control unit 6.

The weather sensor 7 acquires information regarding the weather around the place where the photovoltaic apparatus 100 is installed, and sends the acquired information to the monitoring control unit 6. The information regarding the weather is, for example, information from a solar radiation sensor 7s, a wind direction sensor 7d, a wind speed sensor 7v, a temperature sensor 7t, etc.

Although FIG. 5 shows only 1 unit of a photovoltaic apparatus 100 for convenience of drawing, all the photovoltaic apparatuses 100 are similarly connected to the transformer apparatus 5 and the monitoring control unit 6. Therefore, the transformer apparatus 5 collects the outputs (AC power) from the inverters 4 of all the photovoltaic apparatuses 100. The monitoring control unit 6 can acquire, from the inverters 4 of all the photovoltaic apparatuses 100, information regarding generated power and error information, and can also acquire, from the transformer apparatus 5, information regarding generated power of the entire system, and error information. In addition, the monitoring control unit 6 has the drive control units 3 of all the photovoltaic apparatuses 100 under its control, and therefore can acquire information regarding tracking operation and error information from all the drive control units 3.

The monitoring control unit 6 includes a computer, and achieves a necessary monitoring control function by the computer executing software (computer program). The software is stored in a storage device (not shown) of the monitoring control unit 6. The monitoring control unit 6 may be present in the place where the photovoltaic apparatus 100 is installed, or may be present as a remote site server.

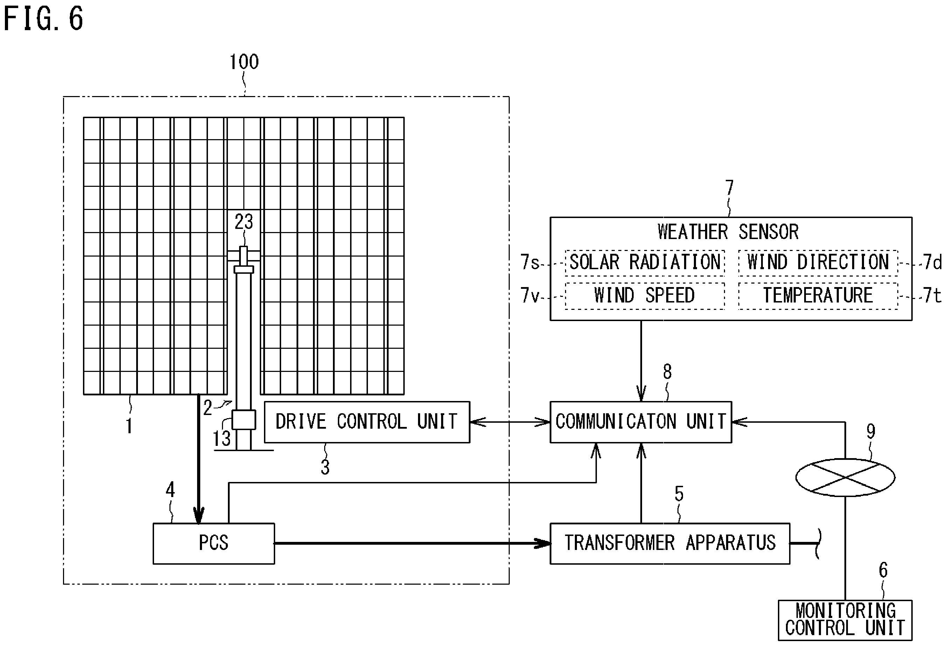

FIG. 6 is a connection diagram as a modification of FIG. 5. FIG. 6 is different from FIG. 5 in that only the communication unit 8 is present in or near the place where the photovoltaic apparatus 100 is installed while the monitoring control unit 6 is connected to the communication unit 8 via an Internet line 9, and the other structures are the same. Thus, the monitoring control unit 6 can be installed in any place without being limited to the place where the photovoltaic apparatus 100 is installed.

### <<Monitoring control operation>>

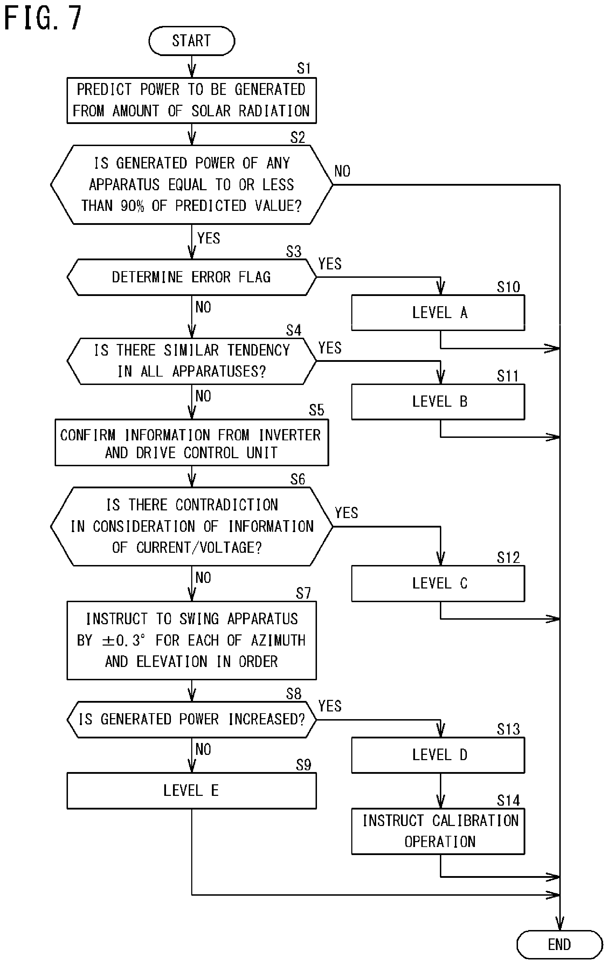

Next, an example of a monitoring control operation by the monitoring control unit 6 will be described with reference to a flowchart shown in FIG. 7. Processing according to this flowchart is periodically executed. In FIG. 7, based on a detection output from the weather sensor 7, the monitoring control unit 6 predicts power to be generated, from the amount of solar radiation (step S1). Next, the monitoring control unit 6 determines whether or not the generated power of any photovoltaic apparatus 100 is lowered to be equal to or less than 90% of the predicted value (step S2). Usually, the actually generated power is higher than 90% of the predicted value. Since the generated power exceeding 90% causes no problems, the processing is ended.

Meanwhile, when the generated power of any photovoltaic apparatus 100 is equal to or less than 90% of the predicted value in step S2, the monitoring control unit 6 performs determination of an error flag (step S3). The error flag is error information, indicating a failure or the like, transmitted from any of the drive control unit 3, the inverter 4, and the transformer apparatus 5. When an error flag is confirmed, this situation is determined as level A at which failure or the like indicated by the error flag is reported (step S10). Specifically, the error flag indicates, for example, defect of tracking operation, defect of the inverter 4, or defect inside the transformer apparatus 5.

When there is no error flag, the monitoring control unit 6 determines whether or not there is a similar tendency (90% or less) in all the photovoltaic apparatuses 100 (step S4). If there is a similar tendency, this situation is determined as level B (step S11). Specifically, the level B is defect of the solar radiation sensor 7s. That is, since it is difficult to consider that abnormalities occur in all the photovoltaic apparatuses 100 at the same time, the monitoring control unit 6 determines that the solar radiation sensor 7s detects a higher value than the actual solar radiation.

When a similar tendency is not observed in step S4, the monitoring control unit 6 confirms information from the inverter 4 and the drive control unit 3, in regard to the photovoltaic apparatus 100 in question whose generated power is equal to or less than 90% of the predicted value (step S5). Then, the monitoring control unit 6 firstly determines whether or not there is a numerical contradiction, in consideration of information of current/voltage based on the information from the inverter 4 (step S6). The contradiction is, for example, that the current is small while the voltage is sufficient. This situation is determined as level C (step S12). In the level C, for example, defect of wiring from the photovoltaic panel to the inverter 4 is expected. Field investigation is required to decide the cause of this defect.

When the determination result in step S6 is "No", it is assumed, as a remaining possible cause, that tracking is not accurately performed, i.e., tracking deviation occurs. Therefore, the monitoring control unit 6 instructs the drive control unit 3 to swing the photovoltaic apparatus 100 in question, by +0.3° and -0.3° for each of the azimuth and the elevation in this order (step S7). If the generated power increases as the photovoltaic apparatus 100 is swung by +0.3° and decreases as the photovoltaic apparatus 100 is swung by -0.3°, this response indicates that tracking deviates toward the negative side. Meanwhile, if the generated power increases as the photovoltaic apparatus 100 is swung by -0.3° and decreases as the photovoltaic apparatus 100 is swung by +0.3°, this response indicates that tracking deviates toward the positive side. Therefore, when the generated power increases (step S8), this situation is determined as level D (step S13). The level D indicates presence of tracking deviation. In this case, the monitoring control unit 6 instructs the drive control unit 3 of the photovoltaic apparatus 100 in question to perform calibration operation (step S14).

When increase in generated power is not observed in step S8, this situation is determined as level E (step S9). The level E is, for example, abnormality of the photovoltaic panel 1 itself.

Regarding abnormality of the solar radiation sensor 7s, reduction in sensitivity of the solar radiation sensor 7s is also considered. In this case, the predicted value may be reduced in step S1 in FIG. 7, and the generated power may exceed the predicted value. If the above case is assumed, it is possible to detect abnormality of the solar radiation sensor 7s, based on an event that the generated power is increased to, for example, 110% or more of the predicted value in step S2, and on an event that all the photovoltaic apparatuses have a similar tendency (step S4).

### <<Conclusion>>

As described above, in the photovoltaic system 300, the monitoring control unit 6 can remotely control the drive control unit 3. The monitoring control unit 6 is communicable with all the drive control units 3, all the inverters 4, the transformer apparatus 5, and the weather sensor 7, and has a function of detecting occurrence of abnormality and determining the type of the abnormality, based on information collected through communication.

In the photovoltaic system 300, information of tracking operation and information of generated power regarding each photovoltaic apparatus 100 are collected to the monitoring control unit 6, for all the photovoltaic apparatuses 100. The monitoring control unit 6 can detect occurrence of abnormality and determine the type of the abnormality, based on the collected information. In addition, the monitoring control unit 6 has all the drive control units 3 under its control, and therefore can serve as a master controller regarding tracking. That is, the monitoring control unit 6 can perform both monitoring and control for all the drive control units 3. According to this photovoltaic system, monitoring of the entire system and tracking control can be performed more efficiently.

### <<Supplementary note>>

It should be noted that the embodiment disclosed herein is merely illustrative and not restrictive in all aspects. The scope of the present invention is defined by the scope of the claims, and is intended to include meaning equivalent to the scope of the claims and all modifications within the scope.

### REFERENCE SIGNS LIST

- 1: photovoltaic panel
- 1M: concentrator photovoltaic module
- 2: support device
- 3: drive control unit
- 4: inverter
- 5: transformer apparatus
- 6: monitoring control unit
- 7: weather sensor
- 7d: wind direction sensor
- 7s: solar radiation sensor
- 7t: temperature sensor
- 7v: wind speed sensor
- 8: communication unit
- 9: Internet line
- 11: mounting base
- 12: reinforcing member
- 13: box
- 21: post
- 22: base
- 23: biaxial drive part
- 24: horizontal shaft
- 100: photovoltaic apparatus
- 200: photovoltaic apparatus group
- 300: photovoltaic system

## Claims

1. A photovoltaic system composed of a plurality of units of photovoltaic apparatuses collected together, each apparatus performing an operation of tracking the sun during daytime, the system comprising:
drive control units provided so as to correspond to the respective units of photovoltaic apparatuses;
inverters provided so as to correspond to the respective units of photovoltaic apparatuses;
a transformer apparatus configured to collect power from the inverters;
a weather sensor configured to acquire information regarding weather in a place where the photovoltaic apparatuses are installed; and
a monitoring control unit capable of remotely controlling the drive control units, and capable of communicating with all the drive control units, all the inverters, the transformer apparatus, and the weather sensor, the monitoring control unit having a function of detecting abnormality, based on information collected through communication.

2. The photovoltaic system according to claim 1, wherein
the monitoring control unit determines whether or not deviation in tracking the sun occurs, based on response of generated power in a case where a tracking attitude of each photovoltaic apparatus is swung forward and backward within a predetermined range, for each of azimuth and elevation, and
upon determining that tracking deviation occurs, the monitoring control unit causes the corresponding drive control unit to perform calibration operation for canceling the tracking deviation.

3. The photovoltaic system according to claim 1 or 2, wherein
when deviation of generated power from a predicted value is substantially the same in all the photovoltaic apparatuses, the monitoring control unit determines that a solar radiation sensor, which is the weather sensor, has abnormality.

4. The photovoltaic system according to any one of claims 1 to 3, wherein the monitoring control unit is present via an Internet line from the place where the photovoltaic apparatuses are installed.
